# EUROPEAN PATENT APPLICATION

(11) **EP 4 173 902 A1**
(43) Date of publication of application: **03.05.2023**
(21) Application number: 21828346.3
(22) Date of filing: 21.05.2021
(51) Int. Cl.: B60S 5/06, B60L 53/80

(54) **BATTERY TRANSMISSION SYSTEM AND BATTERY SWAP STATION THEREFOR**

(30) Priority: 24.06.2020 CN 202010595233
(71) Applicant: Nio Technology (Anhui) Co., Ltd, Hefei City, Anhui 230601 (CN)
(72) Inventor: LI, Yongjie, Shanghai 201804 (CN); YANG, Chao, Shanghai 201804 (CN); ZHANG, Ning, Shanghai 201804 (CN); CAO, Jia, Shanghai 201804 (CN); ZHANG, Xiang, Shanghai 201804 (CN); XIA, Lijian, Shanghai 201804 (CN)
(74) Representative: Vossius & Partner Patentanwälte Rechtsanwälte mbB
(86) International application number: PCT/CN2021/095204
(87) International publication number: WO 2021/258946

(57) **Abstract**

The disclosure provides a battery conveying system and a battery swap station comprising same. The battery conveying system comprises a battery swap platform, a battery demounting and mounting mechanism, and a battery conveying mechanism. The battery swap platform has an accommodating structure, a battery demounting and mounting area above the accommodating structure, and a battery transfer area inside the accommodating structure. The demounting and mounting structure is located in the accommodating structure and can be lifted or lowered relative to the accommodating structure such that a battery is transferred between the battery demounting and mounting area and the battery transfer area. The battery conveying mechanism extends from the battery transfer area to the outside of the accommodating structure via a side portion of the accommodating structure, and is configured to convey the battery between the battery transfer area and the outside of the accommodating structure. In this way, battery moving is implemented under the battery demounting and mounting area, thereby ensuring personal safety in a battery swap process and reducing the risk of foreign objects entering the battery.

## Description

### Technical Field

Embodiments of the disclosure relate to the field of battery conveying technologies, and in particular, to a battery conveying system and a battery swap station comprising same.

### Background Art

With the development of automobile technologies, new energy vehicles have become a mainstream development trend of the automobile industry. Battery swap stations are automation devices for swapping batteries for electric vehicles.

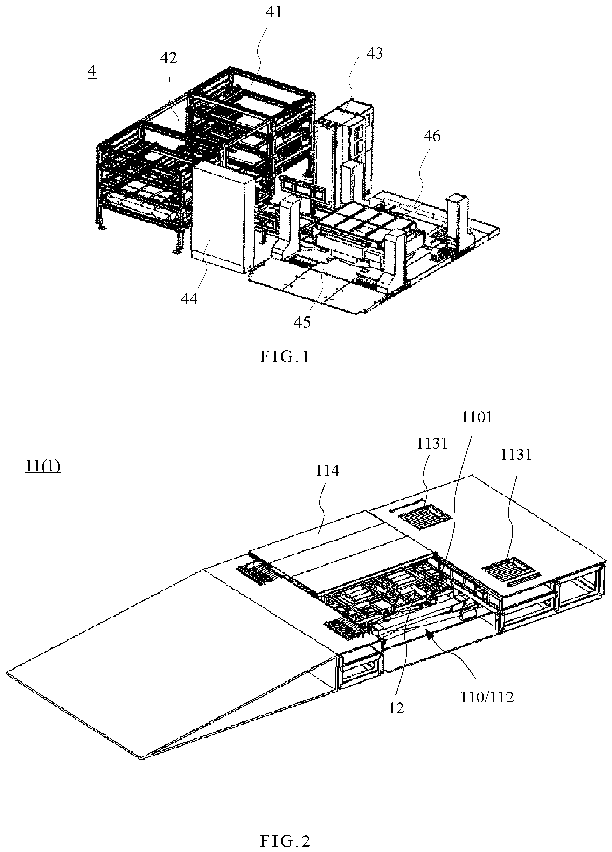

As shown in Fig. 1, an existing battery swap station 4 is substantially composed of battery compartments 41, a hoister 42, a charging cabinet 43, a control cabinet 44, a rail guided vehicle (RGV) 45, and a battery swap platform 46.

When a vehicle needs to be subjected to a battery swap operation, the vehicle is driven into and parked on the battery swap platform 46 first, and a used battery is removed from the vehicle parked on the battery swap platform 46 by the rail guided vehicle 45, transferred from the battery swap platform 46 to the hoister 42, and then transferred by the hoister 42 to an empty battery compartment 41 for storage and charging; and moreover, a fully-charged battery is picked by the hoister 42 from another battery compartment 41 and transferred to the rail guided vehicle 45, the rail guided vehicle 45 travels to the battery swap platform 46, and then the fully-charged battery is mounted on the vehicle, so that the battery swap operation of the vehicle is completed.

The existing vehicle battery swap operation has the disadvantage that the battery is completely exposed in a visible range in a process of being conveyed from the battery swap platform to the battery compartment, which is easy to cause the problems of a collision to personnel and the battery being contaminated by intrusion of foreign objects, resulting in a safety hazard.

Furthermore, since the existing battery swap platform needs to reserve a moving space for the rail guided vehicle 45, it is necessary to lift or lower the vehicle in a large extent before the battery swap operation is performed on the vehicle, which requires the driver and passengers to leave the vehicle when the vehicle is subjected to battery swapping. This not only increases the total time spent on battery swapping, but also brings a poor battery swap experience to car owners.

### Summary of the Disclosure

In view of the above problem, the disclosure provides a battery conveying system and a battery swap station comprising same, which can overcome the above problems or at least partially solve the above problems.

A first aspect of the disclosure is to provide a battery conveying system, comprising: a battery swap platform, having an accommodating structure, a battery demounting and mounting area above the accommodating structure, and a battery transfer area inside the accommodating structure; a battery demounting and mounting mechanism, arranged in the battery transfer area of the accommodating structure and enabled to be lifted to the battery demounting and mounting area from the battery transfer area relative to the accommodating structure or lowered to the battery transfer area from the battery demounting and mounting area relative to the accommodating structure so as to convey a battery between the battery demounting and mounting area and the battery transfer area; and a battery conveying mechanism, extending from the battery transfer area to the outside of the accommodating structure via a side portion of the accommodating structure, and configured to convey the battery between the battery transfer area and the outside of the accommodating structure.

Optionally, the battery swap platform further comprises a parking mechanism that is arranged in the battery demounting and mounting area above the accommodating structure and used for parking of a vehicle; and when the battery demounting and mounting mechanism is lifted to the battery demounting and mounting area, a battery demounting and mounting operation can be performed for the vehicle parked on the parking mechanism.

Optionally, the accommodating structure is further provided with an opening, the battery swap platform is further provided with a cover, the cover is slidably arranged on the accommodating structure to realize opening or closing of the opening of the accommodating structure, wherein when the cover slides open to expose the opening, the battery demounting and mounting area and the battery transfer area communicate with each other, and when the cover slides closed to block the opening, the battery demounting and mounting area and the battery transfer area are isolated from each other by the cover.

Optionally, when the opening is closed by the cover, the vehicle can enter or exit the parking mechanism.

Optionally, the battery conveying mechanism comprises: a conveying device, extending from the battery transfer area to the outside of the accommodating structure via a side portion of the accommodating structure, wherein the conveying device can be docked with the battery demounting and mounting mechanism in the battery transfer area, so that the battery is allowed to be conveyed between the conveying device and the battery demounting and mounting mechanism; and a driving device, connected to the conveying device and configured to drive the conveying device to act such that the battery carried on the conveying device is conveyed between the battery transfer area and the outside of the accommodating structure.

Optionally, the conveying device comprises one of a roller conveying line, a chain conveying line, and a belt conveying line.

Optionally, the battery conveying mechanism comprises: a guide rail, extending from the battery transfer area to the outside of the accommodating structure via a side portion of the accommodating structure; and a carrying device, slidably mounted on the guide rail, wherein the carrying device can be docked with the battery demounting and mounting mechanism in the battery transfer area such that the battery is allowed to be conveyed between the battery demounting and mounting mechanism and the carrying device, and the carrying device can also carry the battery to slide along the guide rail such that the battery is allowed to be conveyed between the outside of the accommodating structure and the battery transfer area.

Optionally, the carrying device comprises a rail guided vehicle.

Optionally, the battery conveying mechanism comprises a carrying device that can be docked with the battery demounting and mounting mechanism in the battery transfer area such that the battery is allowed to be conveyed between the battery demounting and mounting mechanism and the carrying device, and the carrying device can also carry the battery to run along a preset trajectory such that the battery is allowed to be conveyed between the outside of the accommodating structure and the battery transfer area.

Optionally, the battery conveying mechanism comprises: a guide rail, extending from the battery transfer area to the outside of the accommodating structure via a side portion of the accommodating structure; wherein the battery demounting and mounting mechanism is slidably mounted on the guide rail and can slide along the guide rail such that the battery is conveyed between the battery transfer area and the outside of the accommodating structure.

Optionally, the battery conveying mechanism includes a first battery conveying sub-mechanism and a second battery conveying sub-mechanism, wherein the first battery conveying sub-mechanism extends from the battery transfer area to the outside of the accommodating structure via a first side portion of the accommodating structure along a first direction, and the second battery conveying sub-mechanism extends from the battery transfer area to the outside of the accommodating structure via a second side portion of the accommodating structure along a second direction; and the first direction is opposite to the second direction, and the first side portion and the second side portion are respectively provided on two opposite sides of the accommodating structure.

A second aspect of the disclosure is to provide a battery swap station, comprising: the battery conveying system according to the first aspect; and a battery storage mechanism for storing a battery; wherein the battery conveying mechanism is connected to the battery storage mechanism and the battery transfer area via a side portion of the accommodating structure and configured to convey the battery between the battery storage mechanism and the battery transfer area.

Optionally, the battery storage mechanism includes two battery storage racks and a lifting device arranged between the two battery storage racks, wherein one of the battery storage racks has a battery conveying passage, and the battery conveying mechanism is connected to the battery transfer area and the lifting device through the battery conveying passage.

Optionally, the battery swap platform of the battery conveying system is adjacently arranged on one side of the battery storage rack having the battery conveying passage.

Optionally, the battery swap station further comprises a rest room and a control room, wherein the two battery storage racks are adjacently arranged on two opposite sides of the lifting device along a first axis, the rest room and the control room are adjacently arranged on two opposite sides of the lifting device along a second axis perpendicular to the first axis, and the battery swap station, the rest room, the two battery storage racks, and the lifting device form a rectangular layout.

Optionally, the battery swap station further comprises a parking area that is arranged on an opposite side, adjacent to the battery storage rack, of the battery swap platform.

Optionally, the battery storage mechanism includes a plurality of battery storage racks arranged side by side on one side of a lifting device, and the lifting device can move along a horizontal direction of the battery storage racks to be docked with a specified one of the battery storage racks.

Optionally, the battery storage rack includes a plurality of battery compartments arranged in a stacking manner, and the lifting device can be lifted or lowered along a vertical direction of the battery storage rack to be docked with a specified one of the battery compartments.

Optionally, the battery swap station further comprises a charging device respectively arranged in each battery compartment and electrically connected to the battery stored in each battery compartment for charging.

Optionally, the battery storage mechanism includes a first battery storage sub-mechanism and a second battery storage sub-mechanism, the battery conveying mechanism of the battery conveying system includes a first battery conveying sub-mechanism and a second battery conveying sub-mechanism, wherein the first battery storage sub-mechanism and the second battery storage sub-mechanism are respectively arranged on two opposite sides of the battery swap platform of the battery conveying system, the first battery conveying sub-mechanism extends from the battery transfer area to the first battery storage sub-mechanism via a first side portion of the accommodating structure along a first direction, and the second battery transport sub-mechanism extends from the battery transfer area to the second battery storage sub-mechanism via a second side portion of the accommodating structure along a second direction; the first direction is opposite to the second direction, and the first side portion and the second side portion are respectively provided on two opposite sides of the accommodating structure, wherein the first battery conveying sub-mechanism is configured to receive a used battery transferred by the battery transfer area of the battery swap platform, and convey the used battery to the first battery storage sub-mechanism; the second battery conveying sub-mechanism is configured to receive a fully-charged battery transferred by the second battery storage sub-mechanism, and convey the fully-charged battery to the battery transfer area of the battery swap platform; and the first battery conveying sub-mechanism and the second battery sub-mechanism can simultaneously convey batteries.

It can be seen from the above technical solutions that according to the battery conveying system and the battery swap station comprising same provided in the embodiments of the disclosure, battery moving can be implemented under the battery demounting and mounting area, and a battery moving path can be hidden under the parking mechanism, which can not only improve device safety in a battery moving process but also shorten the battery moving path to improve battery conveying efficiency.

Furthermore, according to the battery conveying system and the battery swap station comprising same provided in the embodiments of the disclosure, space utilization can be improved, and structural design of the battery conveying system and the swap station comprising same is more compact, so that space occupation of devices is reduced.

### Brief Description of the Drawings

In order to illustrate the technical solutions in the embodiments of the disclosure or in the prior art more clearly, a brief introduction to the drawings required for the embodiments or the prior art will be provided below. Obviously, the drawings in the following description are merely some of the embodiments of the disclosure, and those of ordinary skills in the art would also obtain other drawings according to these drawings.
Fig. 1 is a schematic diagram of an overall structure of an existing battery swap station;
Fig. 2 is a schematic structural diagram of the part of a battery swap platform of a battery conveying system according to a first embodiment of the disclosure;
Figs. 3A to 3D are schematic diagrams of different structure configurations of the battery conveying system according to the first embodiment of the disclosure;
Fig. 4A is a top view of an overall structure of a battery swap station according to a second embodiment of the disclosure;
Fig. 4B is an exploded view of the battery swap station according to the second embodiment of the disclosure;
Fig. 5 is a schematic structural diagram of a battery storage mechanism of the battery swap station according to the second embodiment of the disclosure;
Figs. 6A to 6D are schematic diagrams of different structure configurations of the battery swap station according to the second embodiment of the disclosure; and
Fig. 6E is a schematic diagram of a different structure configuration of a battery swap station according to still another embodiment of the disclosure.

### Reference signs of elements:

1: battery conveying system; 11: battery swap platform; 110: accommodating structure; 1101: opening; 1102A: first side portion; 1102B: second side portion; 111: battery demounting and mounting area; 112: battery transfer area; 113: parking mechanism; 1131: wheel positioning structure; 114: cover; 12: battery demounting and mounting mechanism; 13: battery conveying mechanism; 13A: first battery conveying sub-mechanism; 13B: second battery conveying sub-mechanism; 131: conveying device; 132: driving device; 133: guide rail; 134: carrying device; 2: battery swap station; 21: electrical room; 22: control room; 23: parking area; 3: battery storage mechanism; 3A: first battery storage sub-mechanism; 3B: second battery storage sub-mechanism; 31A, 31B: battery storage rack; 310: battery conveying passage; 311: battery compartment; 32: lifting device; 4: battery swap station; 41: battery compartment; 42: hoister; 43: charging cabinet; 44: control cabinet; 45: rail guided vehicle; 46: battery swap platform; and 5: battery.

### Detailed Description of Embodiments

In order to make those skilled in the art better understand the technical solutions in the embodiments of the disclosure, the technical solutions in the embodiments of the disclosure will be clearly and completely described below in conjunction with the accompanying drawings in the embodiments of the disclosure. Obviously, the described embodiments are merely some, rather than all, of the embodiments of the disclosure. Based on some of the embodiments of the disclosure, all other embodiments obtained by those of ordinary skills in the art shall fall within the scope of protection of the embodiments of the disclosure.

The specific implementation of the embodiments of the disclosure is further described below with reference to the accompanying drawings of the embodiments of the disclosure.

### First embodiment

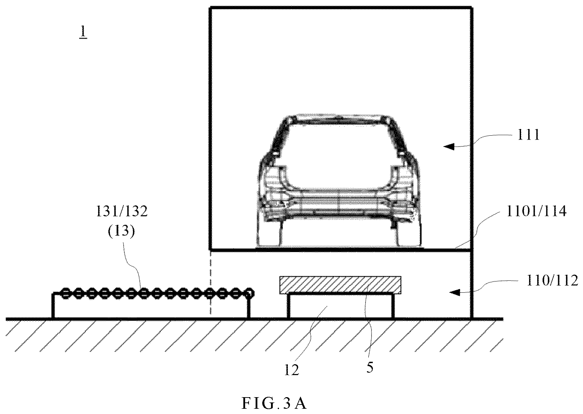

Referring to Fig. 2, and Figs. 3A to 3D, the first embodiment of the disclosure provides a battery conveying system 1. As shown in the figures, the battery conveying system 1 in this embodiment substantially comprises a battery swap platform 11, a battery demounting and mounting mechanism 12, and a battery conveying mechanism 13.

The battery swap platform 11 has an accommodating structure 110, a battery demounting and mounting area 111 above the accommodating structure 110, and a battery transfer area 112 inside the accommodating structure 110.

In this embodiment, the battery demounting and mounting area 111 is an area for performing a demounting and mounting operation of a battery 5 for a vehicle, and the battery transfer area 112 is an area for transferring of the battery 5.

Specifically, the battery swap platform 11 also has a parking mechanism 113 that is arranged in the battery demounting and mounting area 111 above the accommodating structure 110 and used for parking of the vehicle.

Preferably, the parking mechanism 113 is provided with a wheel positioning structure 1131 for positioning wheels of the vehicle so that the vehicle is positioned at a predetermined position of the parking mechanism 113.

In this embodiment, the accommodating structure 110 is further provided with a cover 114, wherein the cover 114 can move relative to the accommodating structure 110 to switch between an open state and a closed state. When the cover 114 is in the open state, the battery transfer area 112 inside the accommodating structure 110 can be exposed, so that the battery transfer area 112 and the battery demounting and mounting area 111 above same communicate with each other. When the cover 114 is in the closed state, the battery transfer area 112 inside the accommodating structure 110 is enclosed, the battery demounting and mounting area 111 and the battery transfer area 112 are separated from each other by the cover 114.

Optionally, the accommodating structure 110 has an opening 1101, and the battery swap platform 11 is further provided with a cover 114, wherein the cover 114 is slidably arranged on the accommodating structure to realize opening or closing of the opening 1101 of the accommodating structure 110.

Optionally, the accommodating structure 110 includes an accommodating compartment, and the cover 114 includes at least one compartment door.

In this embodiment, when the cover 114 slides open to expose the opening 1101 of the accommodating structure 110, the battery transfer area 112 and the battery demounting and mounting area 111 above same communicate with each other. When the cover 114 slides closed to block the opening 1101 of the accommodating structure 110, the battery transfer area 112 and the battery demounting and mounting area 111 are separated by the cover 114 as two relatively independent spaces.

Furthermore, when the opening 1101 of the accommodating structure 110 is closed by the cover 114 of the battery swap platform 11, the vehicle can enter or exit the parking mechanism 113.

The battery demounting and mounting mechanism 12 is arranged in the battery transfer area 112 in the accommodating structure 110, and can be lifted to the battery demounting and mounting area 111 from the battery transfer area 112 relative to the accommodating structure 110 or lowered to the battery transfer area 112 from the battery demounting and mounting area 111 relative to the accommodating structure 110 so that the battery 5 is transferred between the battery demounting and mounting area 111 and the battery transfer area 112.

In this embodiment, when the cover 114 slides open to expose the opening 1101 of the accommodating structure 110 such that the battery transfer area 112 and the battery demounting and mounting area 111 above same communicate with each other, the battery demounting and mounting mechanism 12 can be lifted into the battery demounting and mounting area 111 from the battery transfer area 112, to perform battery demounting and mounting operations on the vehicle parked on the parking mechanism 113.

Specifically, in an initial state, the battery demounting and mounting structure 12 is integrally accommodated in the accommodating structure 110, and the cover 114 of the battery swap platform 11 is also in a closed state; after the vehicle enters and is parked on the parking mechanism 113, the cover 114 of the battery swap platform 11 can move relative to the accommodating structure 110 to expose the opening 1101 of the accommodating structure 110, so that the battery demounting and mounting structure 12 is lifted relative to the accommodating structure 110 and enters the battery demounting and mounting area 111 from the battery transfer area 112, and performs demounting and mounting operations of the battery 5 for the vehicle.

The battery conveying mechanism 13 extends from the battery transfer area 112 inside the accommodating structure 110 to the outside of the accommodating structure 110 via a side portion of the accommodating structure 110 and is configured to convey the battery 5 between the battery transfer area 112 and the outside of the accommodating structure 110.

The battery conveying mechanism 13 in the embodiment of the disclosure can be implemented through various structural designs. The following will introduce several main implementations of the battery conveying mechanism 13 by way of example with reference to Figs. 3A to 3C.

As shown in Fig. 3A, in an embodiment, the battery conveying mechanism 13 comprises a conveying device 131 and a driving device 132.

The conveying device 131 extends from the battery transfer area 112 to the outside of the accommodating structure 110 via a side portion of the accommodating structure 110, and the conveying device 131 can be docked with the battery demounting and mounting mechanism 12 in the battery transfer area 112, so that the battery 5 is allowed to be conveyed between the conveying device 131 and the battery demounting and mounting mechanism 12.

The driving device 132 is connected to the conveying device 131 and configured to drive the conveying device 131 to act, such that the battery 5 carried on the conveying device 131 is conveyed between the battery transfer area 112 and the outside of the accommodating structure 110.

Optionally, the conveying device 131 comprises one of a roller conveying line, a chain conveying line, and a belt conveying line.

In this embodiment, as a tail end of the conveying device 131 located in the battery transfer area 112 can be docked with the battery demounting and mounting mechanism 12 in a lowered state, the conveying device is configured to convey the battery carried on the conveying device 131 to the battery demounting and mounting mechanism 12, or convey the battery 5 carried on the battery demounting and mounting mechanism 12 to the conveying device 131.

For example, when the conveying device 131 is a roller conveying line, the driving device 132 is configured to drive respective rollers in the roller conveying line to rotate in a clockwise direction or a counterclockwise direction, such that the battery 5 carried on the conveying device 131 is allowed to be transferred from the battery transfer area 112 to the outside of the accommodating structure 110, or conveyed from the outside of the accommodating structure 110 to the battery transfer area 112.

For another example, when the conveying device 131 is a chain conveying line or a belt conveying line, the driving device 132 is configured to drive a chain in the chain conveying line or a belt in the belt conveying line to move toward the direction of the battery transfer area 112 such that the battery 5 carried on the conveying device 131 is allowed to be conveyed from the outside of the accommodating structure 110 to the battery transfer area 112. Alternatively, the driving device 132 is configured to drive the chain in the chain conveying line or the belt in the belt conveying line to move toward an outer direction of the accommodating structure 110, such that the battery 5 carried on the conveying device 131 is allowed to be conveyed from the battery transfer area 112 to the outside of the accommodating structure 110.

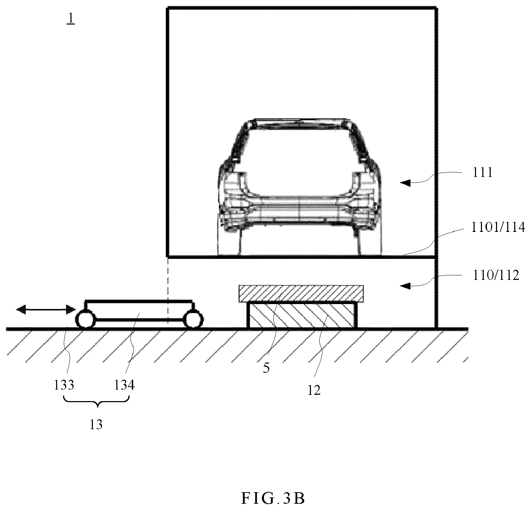

As shown in Fig. 3B, in another embodiment, the battery conveying mechanism 13 comprises a guide rail 133 and a carrying device 134.

The guide rail 133 extends from the battery transfer area 112 to the outside of the accommodating structure 110 via a side portion of the accommodating structure 110.

The carrying device 134 is slidably mounted on the guide rail 133 and can slide relative to the guide rail 133. When the carrying device 134 slides to one end of the guide rail 133 located in the battery transfer area 112, it can be docked with the battery demounting and mounting mechanism 12 in the battery transfer area 112, so that the battery is transferred from the battery demounting and mounting mechanism 12 to the carrying device 134, or the battery is transferred from the carrying device 134 to the battery demounting and mounting mechanism 12.

Furthermore, the carrying device 134 can also slide along the guide rail 133 to carry the battery to be transferred between the outside of the accommodating structure 110 and the battery transfer area 112.

In this embodiment, the carrying device 134 is a rail guided vehicle (RGV).

In another embodiment, the battery conveying mechanism 13 may not need to be provided with the guide rail 133, and is only composed of the carrying device 134 that can travel in a preset trajectory.

Specifically, the carrying device 134 can be docked with the battery demounting and mounting mechanism 12 in the battery transfer area 112, so that the battery is transferred from the battery demounting and mounting mechanism 12 to the carrying device 134, or transferred from the carrying device 134 to the battery demounting and mounting mechanism 12. Moreover, the carrying device 134 can also carry the battery to move along the preset trajectory, so that the battery can be moved between the outside of the accommodating structure 110 and the battery transfer area 112.

In this embodiment, the carrying device 134 is, for example, a transfer robot.

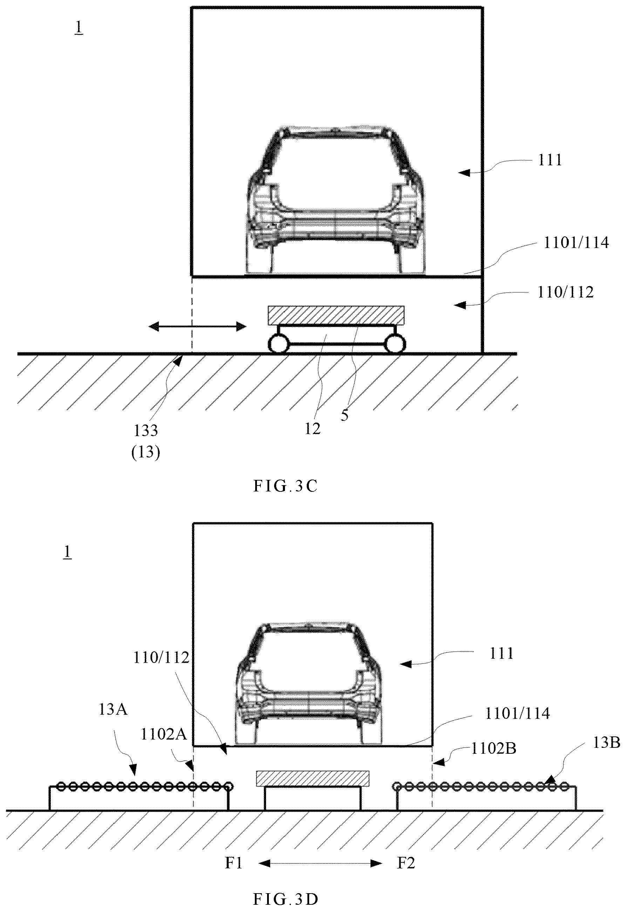

As shown in Fig. 3C, in another embodiment, the battery conveying mechanism 13 comprises only a guide rail 133 that extends from the battery transfer area 112 to the outside of the accommodating structure 110 via a side portion of the accommodating structure 110.

The battery dismounting mechanism 12 is slidably mounted on the guide rail 133 and can slide along the guide rail 133 such that the battery 5 is conveyed between the battery transfer area 112 and the outside of the accommodating structure 110.

As shown in Fig. 3D, in another embodiment, the battery conveying mechanism 13 may include a first battery conveying sub-mechanism 13A and a second battery conveying sub-mechanism 13B, wherein the first battery conveying sub-mechanism 13A extends from the battery transport area 112 to the outside of the accommodating structure 110 via a first side portion 1102A of the accommodating structure 110 along a first direction F1, and the second battery conveying sub-mechanism 13B extends from the battery transfer area 112 to the outside of the receiving structure 110 via a second side portion 1102B of the receiving structure 110 along a second direction F2. As can be seen from Fig. 3D, in this embodiment, the first direction F1 is opposite to the second direction F2, and the first side portion 1102A and the second side portion 1102B are respectively provided on two opposite sides of the accommodating structure. In this way, in the design structure of the embodiment, two opposite sides of the battery transfer area 112 are respectively provided with the battery conveying mechanism 13, which can improve the battery conveying efficiency.

The following is an exemplary description of the battery conveying system 1 in the embodiment of the disclosure performing a task of conveying the battery 5.

In an embodiment, when a used battery 5 needs to be demounted from the vehicle, the opening of the accommodating structure 110 can be closed by the cover 14 of the battery swap platform 11, so that the vehicle can enter and be parked on the parking mechanism 113.

After the vehicle is parked on the parking mechanism 113, the cover 14 slides open to expose the opening 1101 of the accommodating structure 110, and the battery demounting and mounting mechanism 12 can be lifted relative to the accommodating structure 110 to enter the battery demounting and mounting area 111 from the battery transfer area 112, so as to perform a demounting operation of the battery 5 for the vehicle, thereby completing the demounting operation of the battery 5.

After the used battery 5 is demounted from the vehicle, the battery demounting and mounting mechanism 12 is lowered relative to the accommodating structure 110 to carry the used battery 5 from the battery demounting and mounting area 111 back to the battery transfer area 112, and then the used battery 5 is conveyed from the battery transfer area 112 to a specified position of the outside of the accommodating structure 110 through the battery conveying mechanism 13.

In another embodiment, when a fully-charged battery 5 needs to be mounted on the vehicle, the fully-charged battery 5 can be conveyed from the outside of the accommodating structure 110 to the battery transfer area 112 through the battery conveying mechanism 13, and can be lifted relative to the accommodating structure 110 by means of the battery demounting and mounting mechanism 12, such that the fully-charged battery 5 is conveyed to the battery demounting and mounting area 111 from the battery transfer area 112, and the fully-charged battery 5 is mounted on the vehicle parked on the parking mechanism 113, thereby completing a mounting operation of the battery 5.

After the mounting operation of the fully-charged battery 5 is completed, the battery demounting and mounting mechanism 12 can be lowered to the battery transfer area 112 from the battery demounting and mounting area 111, and the opening 1101 of the accommodating structure 110 can be closed by the cover 14, so that the vehicle can exit the parking mechanism 113.

### Second embodiment

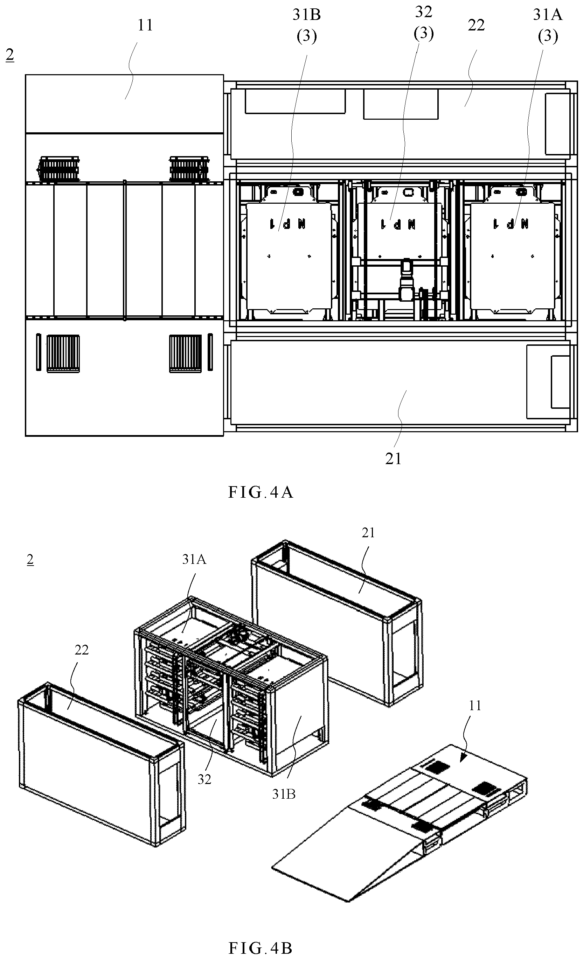

As shown in Fig. 4A, Fig. 4B, Fig. 5, and Figs. 6A to 6C, the second embodiment of the disclosure provides a battery swap station 2. As shown in the figures, the battery swap station 2 in the embodiment of the disclosure mainly comprises: the battery conveying system 1 according to the first embodiment and a battery storage mechanism 3.

Specifically, the battery storage mechanism 3 is used for storing the battery 5, the battery conveying mechanism 13 is connected to the battery storage mechanism 3 and the battery transfer area 112 via a side portion of the accommodating structure 110 and configured to convey the battery 5 between the battery storage mechanism 3 and the battery transfer area 112.

In this embodiment, the battery storage mechanism 3 may include two battery storage racks 31A, 31B and a lifting device 32 arranged between the two battery storage racks 31A, 31B.

Optionally, the battery storage racks 31A, 31B each include a plurality of battery compartments 311 arranged in a stacking manner, and the lifting device 32 can be lifted or lowered along a vertical direction of the battery storage racks 31A, 31B so as to be docked with a specified one of the battery compartment 311.

Optionally, a plurality of battery storage racks 31A, 31B may also be arranged side by side on one side of the lifting device 32, and the lifting device can move along a horizontal direction of the battery storage racks so as to be docked with a specified one of the battery storage racks 31A, 31B.

For example, a guide rail can be assembled under the lifting device 32 so that the lifting device 32 can move between the plurality of battery storage racks 31A, 31B arranged side by side along the guide rail, thereby increasing the capacity of the battery compartments 311.

Optionally, one of the battery storage racks 13A, 13B has a battery conveying passage 310, and the battery conveying mechanism 13 is connected to the battery transport area 112 and the lifting device 32 via the battery conveying passage 310. In this case, the battery swap platform 11 of the battery conveying system 1 may be adjacently arranged on one side of the battery storage rack 13A or 13B having the battery conveying passage 310 (refer to Fig. 4A).

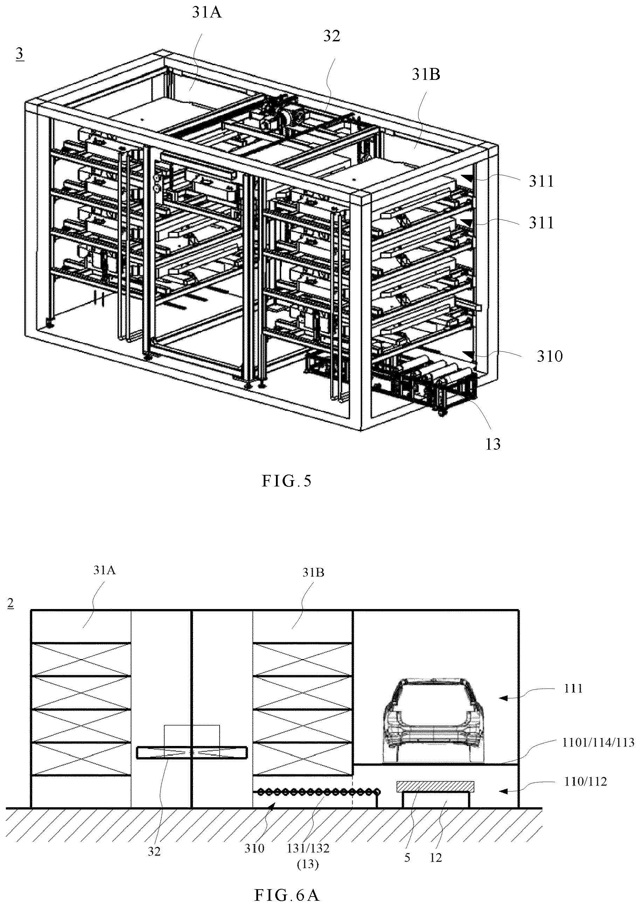

In this embodiment, the battery conveying passage 310 is formed at the bottom of the battery storage rack 13B. The battery conveying mechanism 13 can extend from the battery transport area 112 to the position of the lifting device 32 through the battery conveying passage 310 of the battery storage rack 13B so that the battery 5 can be conveyed between the lifting device 32 and the battery transfer area 112. By means of the structural design of the battery conveying channel 310, the battery swap platform 11 of the battery conveying system 1 can be adjacently arranged on one side of the battery storage rack 13B (refer to Fig. 4A, and Figs. 6A to 6C), which can effectively make the overall structure design of the battery swap station 2 more compact, thereby effectively reducing space occupation of the battery swap station 2. In addition, a battery conveying path between the battery swap platform 11 (the battery transfer area 112) and the battery storage mechanism 3 (the lifting device 32) is also greatly shortened, so that the time for conveying the battery 5 between the above two can be shortened, thereby improving the battery conveying efficiency.

In this embodiment, the battery conveying mechanism 13 of the battery conveying system 1 can also be implemented by different structural designs.

In an embodiment shown in Fig. 6A, the battery conveying mechanism 13 comprises a conveying device 131 and a driving device 132.

The conveying device 131 is, for example, a roller conveying line, a chain conveying line or a belt conveying line, which is connected to the battery transport area 112 and the lifting device 32 via the battery conveying channel 310 at the bottom of the battery storage rack 13B; the driving device 132 is configured to drive the conveying device 131 to act, such that the battery 5 carried on the conveying device 131 is conveyed between the battery transfer area 112 and the lifting device 32.

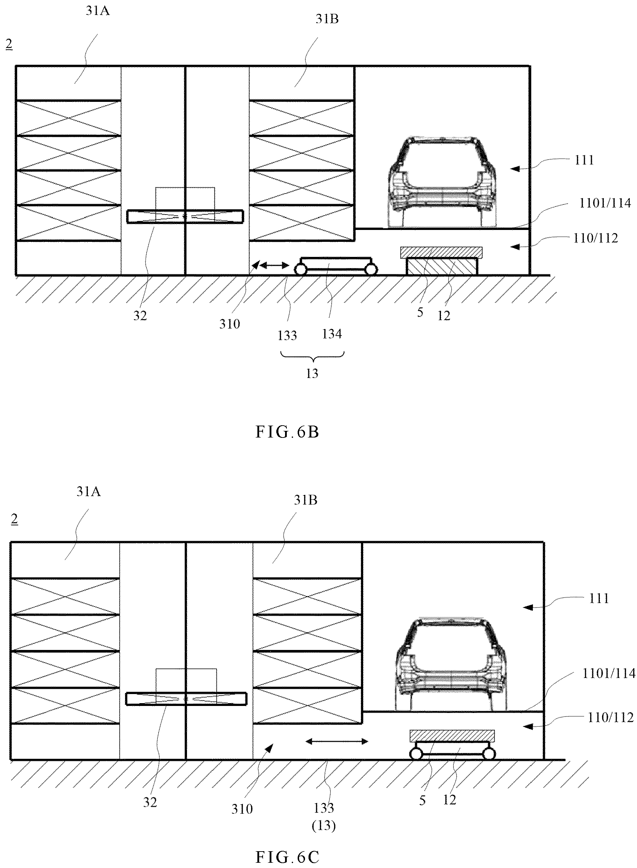

In an embodiment shown in Fig. 6B, the battery conveying mechanism 13 comprises a guide rail 133 and a carrying device 134.

The guide rail 133 can be connected to the battery transfer area 112 and the lifting device 32 via the battery conveying passage 310 at the bottom of the battery storage rack 13B. The carrying device 134 is slidably mounted on the guide rail 133 and can slide along the guide rail 133 to carry the battery 5 to be conveyed between the battery transfer area 112 and lifting device 32.

In an embodiment shown in Fig. 6C, the battery conveying mechanism 13 may only comprise the guide rail 133, which is also connected to the battery transfer area 112 and the lifting device 32 via the battery conveying passage 310 at the bottom of the battery storage rack 13B. The battery demounting and mounting mechanism 12 is directly slidably mounted on the guide rail 133 and can slide along the guide rail 133 to carry the battery 5 to be conveyed between the battery transfer area 112 and the lifting device 32.

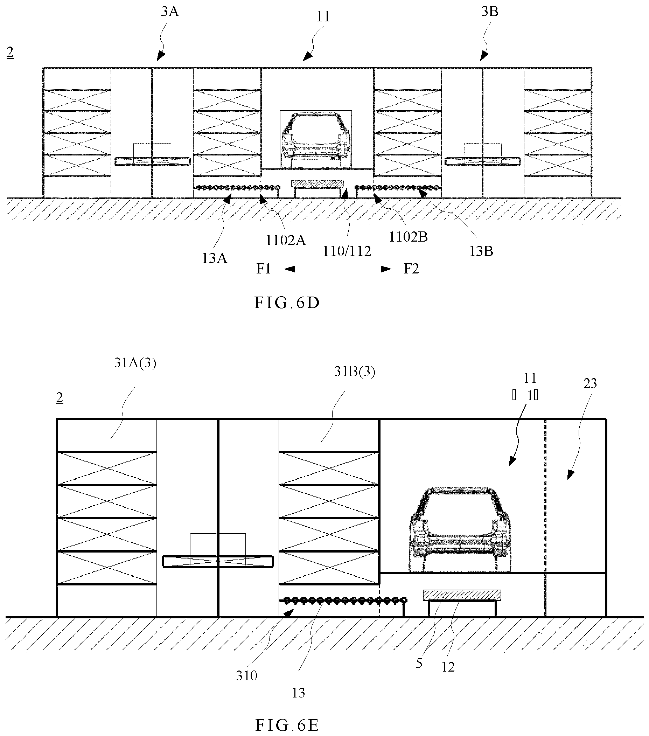

In an embodiment shown in Fig. 6D, the battery storage mechanism 3 includes a first battery storage sub-mechanism 3A and a second battery storage sub-mechanism 3B. Correspondingly, the battery conveying mechanism 13 of the battery conveying system 1 includes a first battery conveying sub-mechanism 13A and a second battery conveying sub-mechanism 13B. The first battery storage sub-mechanism 3A and the second battery storage sub-mechanism 3B are respectively arranged on two opposite sides of the battery swap platform 11 of the battery conveying system 1. The first battery conveying sub-mechanism 13A extends from the battery transfer area 112 to the first battery storage sub-mechanism 3A via a first side portion 1102A of the accommodating structure 110 along a first direction F1. The second battery conveying sub-mechanism 13B extends from the battery transport area 112 to the second battery storage sub-mechanism 3B via a second side portion 1102B of the accommodating structure 110 along a second direction F2. It can be seen from Fig. 6D that the first direction F1 is opposite to the second direction F2, and the first side portion 1102A and the second side portion 1102B are provided on two opposite sides of the accommodating structure 110.

In a practical application, the first battery conveying sub-mechanism 13A is configured to receive the used battery sent from the battery transfer area 112 of the battery swap platform 11, and convey the used battery to the first battery storage sub-mechanism 3A; and the second battery conveying sub-mechanism 13B is configured to receive the fully-charged battery transferred by the second battery storage sub-mechanism 3B, and convey the fully-charged battery to the battery transfer area 112 of the battery swap platform 11. Preferably, the first battery conveying sub-mechanism 13A and the second battery sub-mechanism 13B can perform a battery conveying task at the same time, so that the time for a battery swap operation of the vehicle is reduced.

In another embodiment, the battery swap station 2 may further comprise a charging device (not shown) arranged in each battery compartment 311 and electrically connected to the battery 5 stored in each battery compartment 311 for charging.

Referring to Figs. 4A and 4B, in other embodiments, a rest room 21 and a control room 22 may also be provided in the battery swap station 2, wherein the rest room 21 is used for the staff of the battery swap station to have a rest, for example, providing a rest area for the staff of the battery swap station 2 on duty. In addition, the rest room 21 can also be used for storing accessories, tools, and the like. The control room 22 is used for controlling respective operations of the battery conveying system 1 and the battery storage mechanism 3, and also controlling a cooperative operation between the battery conveying system 1 and the battery storage mechanism 3. Specifically, the control room 22 can be used for setting of devices such as a device room, a discharge cabinet, a cooling device, a redistribution cabinet, and for controlling the motion logic of construction of various components in the entire battery swap station 2, for example, battery demounting and mounting operations, transferring and conveying operations, and charging and cooling operations.

As shown in the figures, in this embodiment, the battery storage racks 31A, 31B are respectively adjacently arranged on two opposite sides of the lifting device 32 along a first axis, and the rest room 21 and the control room 22 are respectively arranged on two opposite sides of the lifting device 32 along a second axis perpendicular to the first axis. Individual lengths of the rest room 21 and the control room 22 fit the overall length of the battery storage mechanism 3 formed by the battery storage racks 31A, 31B and the lifting device 32, so that the rest room 21, the control room 22, the two battery storage racks 31A, 31B and the lifting device 32 can be arranged into a rectangular layout, which has the advantage of reducing floor area due to the compact layout.

Referring to Fig. 6E, in another embodiment, the battery swap station 2 may further comprise a parking area 23. The parking area 23 may be provided on an opposite side, adjacent to the battery storage rack 31B, of the battery swap platform 11, and is mainly used for providing the owner of the vehicle with a rest when the vehicle is subjected to the battery demounting and mounting operations.

The following is an exemplary description of the battery swap station 2 in the embodiment of the disclosure performing a battery conveying task.

In this embodiment, the battery conveying mechanism 13 comprises a conveying device 131 and a driving device 132 (i.e., the embodiment shown in Fig. 6A) as an example for description.

When the used battery 5 needs to be demounted from the vehicle, the opening 1101 of the accommodating structure 110 can be closed by the cover 11 of the battery swap platform 11, so that the vehicle can enter and be parked on the parking mechanism 113.

After the vehicle is parked on the parking mechanism 113, the cover 114 of the battery swap platform 11 slides open to expose the opening 1101 of the accommodating structure 110, and the battery demounting and mounting mechanism 12 can be lifted relative to the accommodating structure 110 to enter the battery demounting and mounting area 111 from the battery transfer area 112, so as to perform a demounting operation of the battery for the vehicle, thereby completing the demounting operation of the battery 5.

After a used battery 5 is demounted from the vehicle, the battery demounting and mounting mechanism 12 is lowered relative to the accommodating structure 110 to carry the used battery 5 from the battery demounting and mounting area 111 back to the battery transfer area 112, and the used battery 5 is transferred to the conveying device 131 (the roller conveying line, chain conveying line or belt conveying line) of the battery conveying mechanism 13, such that the used battery 5 is transferred from the battery transfer area 112 to the lifting device 32 by the conveying device 131 through the battery conveying passage 310 under the battery storage compartment 13B, and then, by the lifting device 32 being lifted or lowered relative to the battery storage racks 13A and 13B to be docked with one empty battery compartment 311, the battery 5 is conveyed from the lifting device 32 to the battery compartment 311 for storage and charging.

When a fully-charged battery 5 needs to be mounted on the vehicle, the lifting device 32 can be lifted or lowered relative to the battery storage racks 13A and 13B to be docked with one battery compartment 311 that stores the fully-charged battery 5, such that the fully-charged battery 5 is conveyed from the battery compartment 311 to the lifting device 32; the lifting device 32 is then lifted or lowered again relative to the battery storage racks 13A and 13B to be docked with the conveying device 131 of the battery conveying mechanism 13, such that the battery 5 is transferred from the lifting device 32 onto the conveying device 131; the fully-charged battery 5 is conveyed by the conveying device 131 to the battery transfer area 112 of the battery swap platform 11 through the battery conveying passage 310 under the battery storage compartment 13B, then the battery 5 is transferred from the battery transfer area 112 to the battery demounting and mounting area 111 by the battery demounting and mounting mechanism 12, and the fully-charged battery 5 is then mounted on the vehicle parked on the parking mechanism 113.

After the mounting operation of the fully-charged battery 5 is completed, the opening 1101 of the accommodating structure 110 can be closed by the cover 11 of the battery swap platform 11 so that the vehicle can exit the parking mechanism 113.

In this way, in the battery conveying system provided in the embodiment of the disclosure, the battery transfer area of the battery swap platform is moved from a side of the battery demounting and mounting area to be under the battery demounting and mounting area, so that battery conveying is realized by moving the battery under the battery swap platform, which can prevent the battery from being easily collided by an operator or the risk of foreign object intrusion in the conveying process, thereby improving the device safety in the battery swap process.

Furthermore, in the embodiment of the disclosure, because a battery moving passage is moved to be under the parking mechanism, when the vehicle is subjected to battery demounting and mounting operations, it only needs to be slightly lifted to stay in a horizontal state, so that the driver and passenger of the vehicle do not need to get off, the owner's vehicle battery swap experience is improved, and the operation time of vehicle battery swapping can be shortened. In addition, compared with the prior art, which requires significantly lifting the vehicle to a preset height, the embodiment of the disclosure can significantly reduce the risk of accidental falling of the vehicle, and improve the safety of the battery swap operation.

In addition, an embodiment of the disclosure also provides a battery swap station implemented based on the battery conveying system. By setting the battery conveying passage under the battery storage rack, the battery conveying mechanism of the battery conveying system can be connected to the lifting device of the battery storage mechanism and the battery transfer area of the battery swap platform via the battery conveying passage under the battery storage rack. With this design mechanism, an under-platform closed battery conveying passage can be formed between the battery swap platform and the battery storage mechanism, so as to improve the safety of the battery conveying operation and prevent the battery from being damaged by intrusion of foreign objects in the conveying process.

Moreover, since the battery conveying passage is arranged under the platform, the battery swap platform can be adjacently arranged on one side of the battery storage rack having the battery conveying passage, which can not only effectively shorten the battery conveying path and reduce the battery moving time, but also improve the battery conveying efficiency, and moreover, can also make the design structure of the battery swap station more compact to effectively reduce space occupation of the battery swap station.

In conclusion, it should be noted that the above embodiments are merely intended for describing the technical solutions of the embodiments of the disclosure but not for limiting the disclosure; although the disclosure is described in detail with reference to the foregoing embodiments, those of ordinary skill in the art should understand that they may still make modifications to the technical solutions described in each foregoing embodiment or make equivalent replacements to some technical features thereof; and these modifications or replacements do not make the essence of the corresponding technical solutions depart from the spirit and scope of the technical solutions of each embodiment of the disclosure.

## Claims

1. A battery conveying system, comprising:
a battery swap platform, having an accommodating structure, a battery demounting and mounting area, and a battery transfer area, wherein the battery demounting and mounting area is above the accommodating structure, and the battery transfer area is inside the accommodating structure;
a battery demounting and mounting mechanism, arranged in the battery transfer area of the accommodating structure and enabled to be lifted to the battery demounting and mounting area from the battery transfer area relative to the accommodating structure or lowered to the battery transfer area from the battery demounting and mounting area relative to the accommodating structure so as to convey a battery between the battery demounting and mounting area and the battery transfer area; and
a battery conveying mechanism, extending from the battery transfer area to the outside of the accommodating structure via a side portion of the accommodating structure, and configured to convey the battery between the battery transfer area and the outside of the accommodating structure.

2. The battery conveying system according to claim 1, wherein the battery swap platform further comprises:
a parking mechanism, arranged in the battery demounting and mounting area above the accommodating structure and used for parking of a vehicle; and wherein
when the battery demounting and mounting mechanism is lifted to the battery demounting and mounting area, a battery demounting and mounting operation is enabled to be performed for the vehicle parked on the parking mechanism.

3. The battery conveying system according to claim 1, wherein the accommodating structure is further provided with an opening, the battery swap platform is further provided with a cover, the cover is slidably arranged on the accommodating structure to realize opening or closing of the opening of the accommodating structure, wherein
when the cover slides open to expose the opening, the battery demounting and mounting area and the battery transfer area communicate with each other, and when the cover slides closed to block the opening, the battery demounting and mounting area and the battery transfer area are isolated from each other by the cover.

4. The battery conveying system according to claim 3, wherein when the opening is closed by the cover, the vehicle is enabled to enter or exit the parking mechanism.

5. The battery conveying system according to claim 1, wherein the battery conveying mechanism comprises:
a conveying device, extending from the battery transfer area to the outside of the accommodating structure via a side portion of the accommodating structure, wherein the conveying device is enabled to be docked with the battery demounting and mounting mechanism in the battery transfer area, so that the battery is allowed to be conveyed between the conveying device and the battery demounting and mounting mechanism; and
a driving device, connected to the conveying device and configured to drive the conveying device to act such that the battery carried on the conveying device is conveyed between the battery transfer area and the outside of the accommodating structure.

6. The battery conveying system according to claim 5, wherein the conveying device comprises one of a roller conveying line, a chain conveying line, and a belt conveying line.

7. The battery conveying system according to claim 1, wherein the battery conveying mechanism comprises:
a guide rail, extending from the battery transfer area to the outside of the accommodating structure via a side portion of the accommodating structure; and
a carrying device, slidably mounted on the rail, wherein the carrying device is enabled to be docked with the battery demounting and mounting mechanism in the battery transfer area so that the battery is allowed to be conveyed between the battery demounting and mounting mechanism and the carrying device, and the carrying device is also enabled to carry the battery to slide along the rail such that the battery is allowed to be conveyed between the outside of the accommodating structure and the battery transfer area.

8. The battery conveying system according to claim 7, wherein the carrying device comprises a rail guided vehicle.

9. The battery conveying system according to claim 1, wherein the battery conveying mechanism comprises:
a carrying device, enabled to be docked with the battery demounting and mounting mechanism in the battery transfer area such that the battery is allowed to be conveyed between the battery demounting and mounting mechanism and the carrying device, wherein the carrying device is also enabled to carry the battery to run along a preset trajectory such that the battery is allowed to be conveyed between the outside of the accommodating structure and the battery transfer area.

10. A battery swap station, comprising:
the battery conveying system according to any one of claims 1 to 9, and
a battery storage mechanism for storing a battery, wherein
the battery conveying mechanism is connected to the battery storage mechanism and the battery transfer area via a side portion of the accommodating structure and configured to convey the battery between the battery storage mechanism and the battery transfer area.
